# EUROPEAN PATENT SPECIFICATION

(11) **EP 0 430 320 B1**
(45) Date of publication and mention of the grant of the patent: **08.02.1995**
(21) Application number: 90202957.8
(22) Date of filing: 08.11.1990
(51) Int. Cl.: D03C 5/02, F16H 25/16

(54) **Device for actuating heddles of looms with positive control in both directions of a single contact roller**
Vorrichtung zum Bewegen von Weblitzen mit positiver Steuerung der einzige Kontaktrolle in beiden Richtungen
Dispositif pour activer les lisses de métier à tisser avec contrôle positif d'un seul rouleau de contact dans les deux directions

(30) Priority: 27.11.1989 IT 2251889
(43) Date of publication of application: 05.06.1991
(73) Proprietor: BREVTEX SA, CH-6534 San Vittore/GR (CH)
(72) Inventor: Beretta, Giovanni, Imola (Bologna) (IT)
(74) Representative: Raimondi, Alfredo, Dott. Ing. Prof.

(56) References cited:
- DE-C- 53 712
- FR-A- 502 375

## Description

The subject of the present invention is a control device having pairs of mutually opposed cams with conjugate profiles for actuating heddles in looms, the device having a minimal axial dimension.

In the art of looms which produce the finished cloth by starting from threads constituting the weft and the warp, the need is known for actuating the heddle frames in an alternating, controlled and monitored motion, while maintaining the highest possible speed with minimum dial overall dimension for the purpose of minimizing the depth of the shed and therefore the stroke travelled by the heddle.

For this purpose, so-called weave-control machines have been constructed, for actuating the leverage mechanisms controlling the heddle frames, said weave-control machines using positive actuations having conjugate cams connected to the lever mechanisms controlling said heddle frames, as shown for example in FR-A-502375.

Such machines, however, have certain important limitations, among which are the low torsional stiffness of the rocker arms and the need to apply a so-called preload force to the coupling between control cam and yielding roller for the purpose of reducing as far as possible the plays between the control cams and the rollers carried by the rocker arms; said preload, however, removes a portion of the load available for actuating the heddle, thus compelling a reduction in the movement speed of the heddle frames.

The problem therefore arises of creating a device of the cam type for the positive control in both directions of the actuations of heddles for looms, which shall be of minimal axial dimension so that it may be contained within the maximum space available determined by the pitch of the heddles, shall make possible the use of the whole of the effective load for moving the heddles with a consequent increase in velocity for given conditions, shall assure the maximum accuracy of coupling between rollers and cams for the purpose of reducing the plays between them and shall be provided with the maximum possible stiffness.

The device must, furthermore, be easy to fit and to regulate to allow manual intervention at any time to eliminate play that may have arisen due to wear of the components or the replacement of the sets of cams.

Said results are achieved by the present invention, which provides a control device for actuating the heddle frames in looms, the device having a minimal axial dimension, comprising a pair of mutually opposed cams having conjugate profiles for the positive control in both directions of the lever systems for connection with the heddles, in which the movement controlled by the cams is transmitted to a single contact roller, the surface of which is in positive, direct contact with the surfaces of the opposed cams, at least one of the two actuation shafts for the cams being adjustable in centre-to-centre spacing relative to the other for the purpose of eliminating initial play between the components and for the subsequent taking-up of predetermined play caused by wear.

A preferred form of construction of the control device for actuating the heddle frames in looms according to this invention provides that the centre of rotation of said contact roller shall be disposed on the straight line connecting the centres of rotation of the control cams and that said roller shall be mounted rotatable on a pin carried by one arm of a knee-joint lever rotating about its own axis and the other arm of which is connected to the actuating lever systems for the heddles.

In the control device for actuating the heddle frames with limitation of the axial thickness in looms, it is furthermore provided in a variant that the control of the cams shall be applied to a rigid arm of a knee-joint lever, the surfaces of said arm in contact with the cams being shaped according to a curve such that the locus of the centres of curvature of the contact points is preferably composed of a straight line passing through the centres of rotation of said cams; said arm, furthermore, may in an alternative arrangement have a longitudinal aperture symmetrical about the axis of said arm which makes possible, upon coupling with the cams, a compression of the arm adapted for creating an elastic reaction which permits any predetermined play to be taken up.

It is provided also that, in the control device according to the present invention, the coupling between cams and roller shall be effected by means of configurations of the cams and of the roller in which: the outer rim both of the cams and of the roller is flat; or the outer rim of the cams is U-shaped to retain and guide the flat rim of the roller; or the outer rim of the roller is U-shaped for retaining and guiding the flat rims of the cams.

Further details will be understood from the following description, prepared with reference to the attached drawings, in which there are shown:
- in Fig. 1:: a diagram showing the principles of the control device according to the present invention;
- in Fig. 2:: a partly sectioned view of an example of embodiment of the device of Fig. 1;
- in Fig. 3:: a partial section of the detail of coupling between cams and roller;
- in Figs. 4a and 4b:: examples of a variant of the device according to the present invention;
- in Figs. 5a, b, c:: examples of coupling guidance between cams and roller.

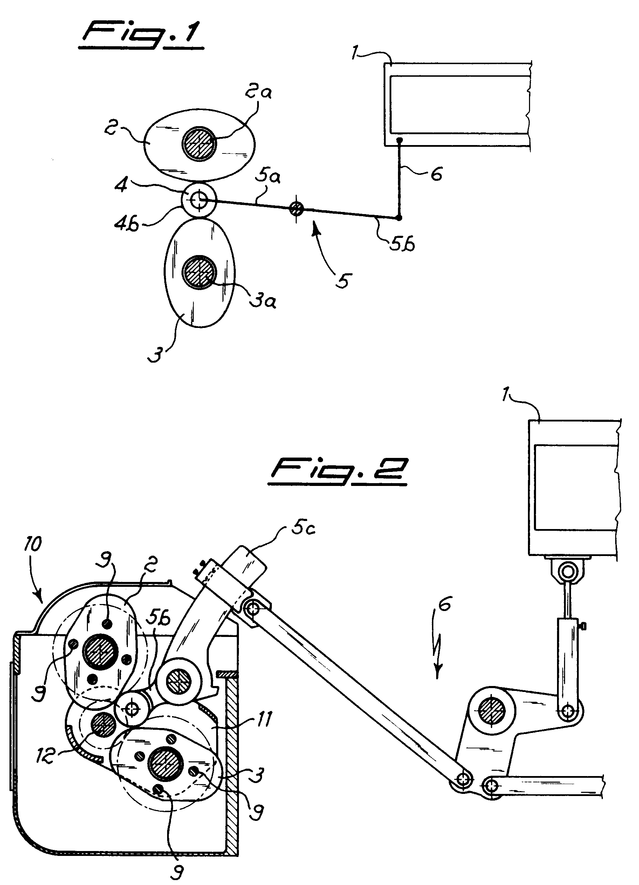

As Figure 1 shows, the control device for actuating the heddles 1 of looms is composed essentially of pairs of mutually opposed cams 2 and 3 having a conjugate profile, keyed respectively to a rotatable shaft 2a and 3a, between which is disposed a roller 4, the external surface 4b of which is in contact with the surfaces of the cams 2 and 3. Said roller, actuated by rolling of said cams, is mounted on an arm 5a of a lever 5, of which the other arm 5b is connected in known manner to the lever systems 6 (Fig. 1) for actuating the heddles 1.

In the arrangement according to this invention, the centres of rotation of the cams and of the roller lie on a single connecting axis of these centres of rotation.

In greater detail (Fig. 2), inside a closed supporting structure 10, the upper cams 2 are keyed on the fixed rotating shaft 2a and are spaced apart by spacer pieces 2b formed on these cams, the cams being held together by fixing tie bars 9; the lower cams 3, in turn, are keyed to a shaft 3a and spaced apart by spacer pieces and held together in the manner described for the cams 2.

The lower shaft 3a is mounted in a cradle 11, which can pivot about the pin 12 so that the shaft 3a can be displaced from its working position with the cradle 11 bearing against the pin 5a of the lever 5 to a remote position which allows the cams to be released, for example for the purpose of replacing them after they have deteriorated due to wear.

Between the external surfaces of the two cams 2 and 3, the yielding roller 4 is inserted, which is mounted free to rotate about a pin 4a fixed to one arm 5b of the knee-joint lever 5, rotatable about its pivot pin 5a, and the other arm 5b of which is connected in known manner to the lever systems for controlling the stroke of the heddles.

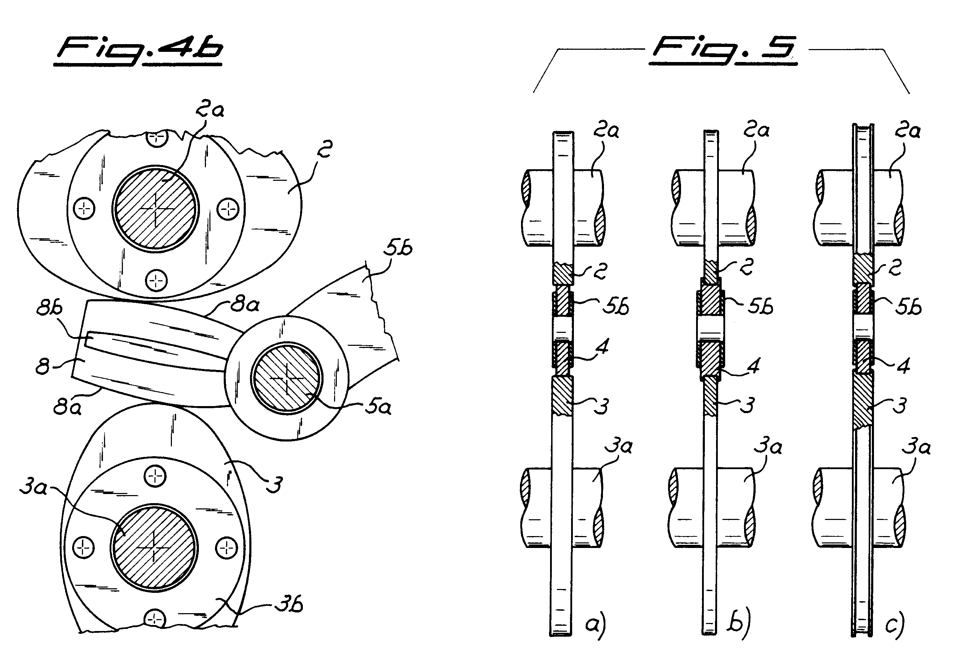

The coupling between the cams 2 and 3 and the roller 4 may be effected according to the examples of Fig. 5, in which in a) there is shown a coupling according to the present invention, with a flat contact rim both of the roller and of the cams; in b) a first possible variant with a roller having a U-shaped rim which retains and guides the outer rims of the cams; in c) a second variant, with the outer rim of the roller flat and with the cams having their rims U-shaped to retain and guide the roller.

With the axial arrangement of the centres of rotation of the two cams and of the roller it is therefore possible to apply a thrust onto the roller from one cam, which thrust is compensated by the reaction of the other cam, in this manner obtaining an optimum contact of the respective surfaces of rotation without reducing the effective load for raising the heddles, and thereby making possible, for a given set of conditions, an increase in the velocity of movement of these heddles.

One of the cams being adjustable in position, it is furthermore possible to eliminate also the plays resulting from any wear, always keeping the optimum contact between the surfaces of the cams and of the roller.

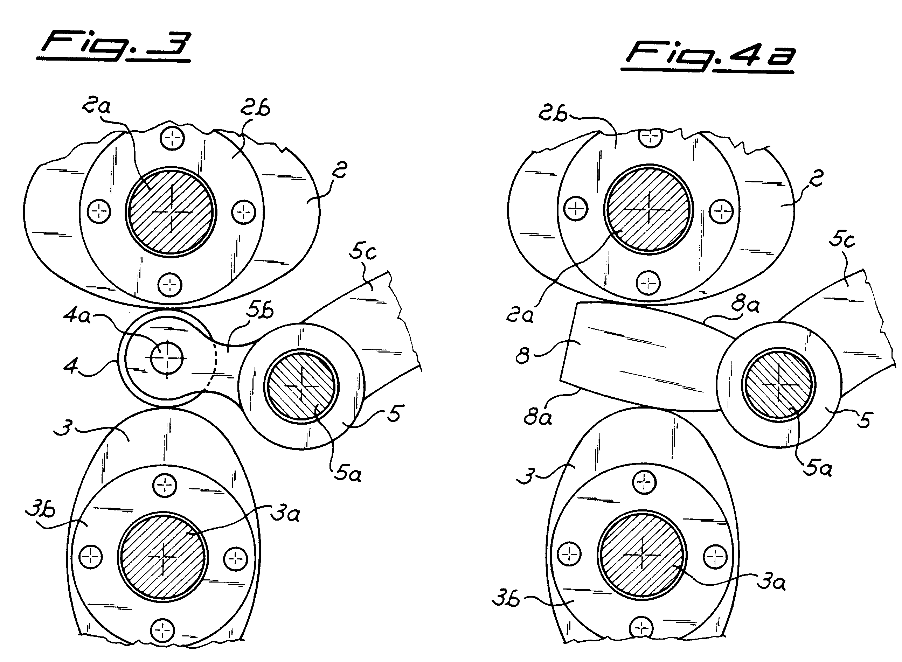

In Fig. 4a there is shown a constructional variant of the control device according to the present invention, in which the yielding roller 4 is replaced by a rigid arm 8, the external contact surfaces 8a of which are curved in such a manner that the locus of the points constituting the centre of curvature, instant by instant in contact with the cams, shall also be formed by the line joining the centres of rotation of the cams 2 and 3; with this configuration, the transmission plays are further reduced, one pivot pin being eliminated.

In Fig. 4b there is also illustrated an improvement to the rigid arm 8, which here possesses an aperture 8b symmetrical about the longitudinal axis of the arm, which aperture allows the arm to be slightly compressed at the instant of coupling with the cams, thus obtaining an elastic reaction capable of absorbing further play that may exist between the surfaces of contact between cams and arm.

Numerous variants may be introduced, without thereby departing from the scope of the present invention in its general characteristics; in particular, it is evident that the centres of rotation of the two cams and of the roller could also not lie on a single straight line connecting together these centres themselves and how it is possible to vary the centre-to-centre spacing between the centres of rotation of the cams by acting on both the rotation shafts, instead of keeping one shaft fixed and acting only on the other.

## Claims

1. Control device for actuating the heddles in looms, the device having a minimal axial dimension, comprising a pair of mutually opposed cams having conjugate profiles for the positive control in both directions of the lever systems for connection with the heddles; characterized by the fact that the movement controlled by the cams is transmitted to a single contact roller, the surface of which is in positive, direct contact with the surfaces of the mutually opposed cams, at least one of the two actuating shafts for the cams being adjustable in centre-to-centre distance with respect to the other for the purpose of eliminating the initial play between the components and for the subsequent taking-up of predetermined play caused by wear.

2. Control device for actuating the heddles in looms, the device having a minimal axial dimension, according to Claim 1, characterized by the fact that the centre of rotation of said contact roller is preferably disposed on the straight line connecting together the centres of rotation of the control cams.

3. Control device for actuating the heddles in looms, the device having a minimal axial dimension, according to Claim 1, characterized by the fact that said roller is mounted rotatable about a pin carried by one arm of a knee-joint lever, pivotal about its own axis and the other arm of which is connected to the lever systems for actuating the heddles.

4. Control device for actuating the heddles in looms, the device having a minimal axial dimension, according to Claim 1, characterized by the fact that the control of the cams is applied to a rigid arm of a knee-joint lever, the surfaces of said arm in contact with the cams being shaped according to a curve such that the locus of the centres of curvature of the contact points is preferably formed by a straight line passing through the centres of rotation of the cams.

5. Control device for actuating the heddles in looms, the device having a minimal axial dimension, according to Claim 4, characterized by the fact that said arm possesses a longitudinal aperture symmetrical about the axis of the arm which makes possible, upon coupling with the cams, a compression of the arm adapted for creating an elastic reaction, which allows possible predetermined plays to be taken up.

6. Control device for actuating the heddles in looms, the device having a minimal axial dimension, according to the preceding Claims, characterized by the fact that the outer rim of said cams and of said roller is flat.

7. Control device for actuating the heddles in looms, the device having a minimal axial dimension, according to Claims 1 to 5, characterized by the fact that the outer rim of the cams is U-shaped to retain and guide the flat rim of the roller.

8. Control device for actuating the heddles in looms, the device having a minimal axial dimension, according to Claims 1 to 5, characterized by the fact that the outer rim of the roller is U-shaped to retain and guide the flat rims of the cams.

## Patentansprüche

1. Steuervorrichtung zum Betätigen der Litzen in Webstühlen, wobei die Vorrichtung eine minimale axiale Abmessung hat, mit einem Paar von gegenüberliegenden Nocken mit konjugierten bzw. paarweisen Profilen für die positive Steuerung in beiden Richtungen der Hebelsysteme zur Verbindung mit den Litzen, dadurch gekennzeichnet, daß die durch die Nocken gesteuerte Bewegung übertragen ist auf eine einzelne Kontaktrolle, deren Oberfläche in positivem direktem Kontakt ist mit den Oberflächen der gegenüberliegenden Nocken, wobei wenigstens eine der zwei Betätigungswellen für die Nocken in einem Mitte-zu-Mitte-Abstand bezüglich der anderen Welle einstellbar ist, um das ursprüngliche Spiel zwischen den Komponenten zu beseitigen und zur nachfolgenden Aufnahme des vorbestimmten Spiels, das durch Abnutzung bzw. Verschleiß verursacht wird.

2. Steuervorrichtung zum Betätigen der Litzen in Webstühlen, wobei die Vorrichtung eine minimale axiale Abmessung hat, gemäß dem Anspruch 1, dadurch gekennzeichnet, daß die Rotationsmitte der Kontaktrolle bevorzugt angeordnet ist auf der geraden Linie, die die Rotationsmitten der Steuernocken miteinander verbindet.

3. Steuervorrichtung zum Betätigen der Litzen in Webstühlen, wobei die Vorrichtung eine minimale axiale Abmessung hat, gemäß dem Anspruch 1, dadurch gekennzeichnet, daß die Rolle drehbar um einen Zapfen angebracht ist, der durch einen Arm eines Kniehebels getragen ist, schwenkbar um seine eigene Achse, und der andere Arm dessen mit den Hebelsystemen zum Betätigen der Litzen verbunden ist.

4. Steuervorrichtung zum Betätigen der Litzen in Webstühlen, wobei die Vorrichtung eine minimale axiale Abmessung hat, gemäß dem Anspruch 1, dadurch gekennzeichnet, daß die Steuerung der Nocken auf einen steifen Arm eines Kniehebels angewendet ist, wobei die Oberflächen des Arms in Kontakt mit den Nocken gemäß einer Kurve derart geformt sind, daß der Ort der Krümmungsmitten der Kontaktpunkte bevorzugt gebildet ist durch eine gerade Linie, welche durch die Rotationsmitten der Nocken verläuft.

5. Steuervorrichtung zum Betätigen der Litzen in Webstühlen, wobei die Vorrichtung eine minimale axiale Abmessung hat, gemäß dem Anspruch 4, dadurch gekennzeichnet, daß der Arm eine longitudinale Öffnung symmetrisch um die Achse des Arms besitzt, die bei Kopplung der Nocken eine Kompression des Arms ermöglicht, die zur Schaffung einer elastischen Reaktion geeignet ist, welche die Aufnahme von möglichen vorbestimmten Spielen ermöglicht.

6. Steuervorrichtung zum Betätigen der Litzen in Webstühlen, wobei die Vorrichtung eine minimale axiale Abmessung hat, gemäß den vorangehenden Ansprüchen, dadurch gekennzeichnet, daß der Außenrand der Nocken und der Rolle flach ist.

7. Steuervorrichtung zum Betätigen der Litzen in Webstühlen, wobei die Vorrichtung eine minimale axiale Abmessung hat, gemäß den Ansprüchen 1 bis 5, dadurch gekennzeichnet, daß der Außenrand der Nocken U-förmig ist, um den flachen Rand der Rolle zu halten und zu führen.

8. Steuervorrichtung zum Betätigen der Litzen in Webstühlen, wobei die Vorrichtung eine minimale axiale Abmessung hat, gemäß den Ansprüchen 1 bis 5, dadurch gekennzeichnet, daß der Außenrand der Rolle U-förmig ist, um die flachen Ränder der Nocken zu halten und zu führen.

## Revendications

1. Dispositif de commande pour activer les lisses dans des métiers à tisser, le dispositif présentant une dimension axiale minimale, comprenant une paire de cames mutuellement opposées présentant des profils conjugués pour la commande positive dans les deux directions des systèmes à leviers en vue d'une liaison avec les lisses, caractérisé par le fait que le mouvement commandé par les cames est transmis à un galet de contact unique, dont la surface est en contact direct positif avec les surfaces des cames mutuellement opposées, au moins l'axe de l'un des deux arbres d'activation pour les cames étant réglable en distance par rapport à l'axe de l'autre dans le but d'éliminer le jeu initial entre les composants et en vue d'un rattrapage ultérieur du jeu prédéterminé causé par l'usure.

2. Dispositif de commande pour activer les lisses dans des métiers à tisser, le dispositif présentant une dimension axiale minimale, selon la revendication 1, caractérisé par le fait que le centre de rotation dudit galet de contact est de préférence placé sur la ligne droite reliant entre eux les centres de rotation des cames de commande.

3. Dispositif de commande pour activer les lisses dans des métiers à tisser, le dispositif présentant une dimension axiale minimale, selon la revendication 1, caractérisé par le fait que ledit galet est monté rotatif autour d'un axe porté par un premier bras d'un levier articulé, pivotant autour de son propre axe et dont l'autre bras est relié aux systèmes à leviers pour activer les lisses.

4. Dispositif de commande pour activer les lisses dans des métiers à tisser, le dispositif présentant une dimension axiale minimale, selon la revendication 1, caractérisé par le fait que la commande des cames est appliquée à un bras rigide d'un levier articulé, les surfaces dudit bras en contact avec les cames étant conformées selon une courbe telle que le lieu des centres de courbure des points de contact est de préférence formé par une ligne droite passant par les centres de rotation des cames.

5. Dispositif de commande pour activer les lisses dans des métiers à tisser, le dispositif présentant une dimension axiale minimale, selon la revendication 4, caractérisé par le fait que ledit bras présente une ouverture longitudinale symétrique par rapport à l'axe du bras qui rend possible, lors de l'accouplement avec les cames, une compression du bras prévue pour créer une réaction élastique, ce qui permet un rattrapage de jeux prédéterminés éventuels.

6. Dispositif de commande pour activer les lisses dans des métiers à tisser, le dispositif présentant une dimension axiale minimale, selon les revendications précédentes, caractérisé par le fait que le rebord externe desdites cames et dudit galet est plat.

7. Dispositif de commande pour activer les lisses dans des métiers à tisser, le dispositif présentant une dimension axiale minimale, selon les revendications 1 à 5, caractérisé par le fait que le rebord externe des cames est en forme de U pour retenir et guider le rebord plat du galet.

8. Dispositif de commande pour activer les lisses dans des métiers à tisser, le dispositif présentant une dimension axiale minimale, selon les revendications 1 à 5, caractérisé par le fait que le rebord externe du galet est en forme de U pour retenir et guider les rebords plats des cames.
